(19)

Europäisches
Patentamt
European
Patent Office
Office européen
des brevets

(11) **EP 1 865 292 B1**

(12) **EUROPEAN PATENT SPECIFICATION**

(45) Date of publication and mention
of the grant of the patent:
**10.03.2010 Bulletin 2010/10**

(51) Int Cl.:
***G01D 5/38*** *(2006.01)*

(21) Application number: **07108393.5**

(22) Date of filing: **16.05.2007**

(54) **Encoder**

Kodierer

Codeur

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **19.05.2006 JP 2006139658
31.01.2007 JP 2007020632**

(43) Date of publication of application:
**12.12.2007 Bulletin 2007/50**

(73) Proprietor: **NIKON CORPORATION
Tokyo 100-8331 (JP)**

(72) Inventors:
• **Makinouchi, Susumu
c/o Nikon Corporation
Chiyoda-ku
Tokyo 100-8331 (JP)**

• **Imai, Toru
c/o Nikon Corporation
Chiyoda-ku
Tokyo 100-8331 (JP)**
• **Watanabe, Akihiro
c/o Nikon Corporation
Chiyoda-ku
Tokyo 100-8331 (JP)**

(74) Representative: **Gill, David Alan
W.P. Thompson & Co.
55 Drury Lane
London WC2B 5SQ (GB)**

(56) References cited:
**EP-A- 0 451 780     JP-A- 2005 003 438
JP-A- 2005 326 231    JP-A- 2005 326 232**

## Description

The present invention relates to encoders, and more specifically to an encoder that optically detects positional information of a scale.

Conventionally, as a typical optical encoder, a so-called diffraction interference type encoder is known, which is equipped with a diffraction grating that moves with a movable body and also has a grating formed at an equal distance in a direction orthogonal to the movement direction, an irradiation optical system that irradiates two coherent interference beams on the diffraction grating, and a detector that makes a positive diffracted light and a negative diffracted light of the same order diffracted by the diffraction grating interfere with each other so as to detect intensity variation of the interference beam, and detects the movement amount of the diffraction grating based on the intensity variation of the interference beam (for example, refer to Kokai (Japanese Patent Unexamined Application Publication) No. 2005-3438).

Meanwhile, in recent years, proposals have been made on optical encoders whose detection accuracy has been increased by improving the S/N ratio (e.g. refer to U.S. Patent No. 6, 639, 686 Description). This encoder is equipped with a scale that has a grating placed along the movement direction of the movable body, and a probe that makes a beam vibrate along the arrangement direction of the grating on the scale. By making the beam vibrate in the arrangement direction of the grating, the probe modulates a signal including information related to the relative position of the scale that uses the vibration center of the beam as the reference position. Then, by demodulating the signal output from the probe using a drive signal that makes the beam vibrate, the relative position between the beam and the scale is detected. Generally, in such an encoder, the higher the modulation efficiency the higher the detection accuracy.

JP 2005 326232 and JP 2005 326231 disclose a photo electric encoder capable of measurement in triaxial directions.

However such known encoders exhibit disadvantageous limitations, for example relating to S/N ratios and modulation efficiency.

Recently, proposals made in relation to the diffraction interference type encoder described above of modulating light have sought to improve the S/N ratio or the like, and improvement in the modulation efficiency is required.

The present invention seeks to provide for an encoder having advantages over known such encoders.

The present invention has been made in consideration of the circumstances described above, and according to the first aspect of the present invention, there is provided an encoder, comprising:

    a first optical member on which an illumination light is incident and where a first light and a second light are generated from different positions or a same position;
    a change unit that periodically modulates an incident angle of the illumination light with respect to the first optical member; and
    a second optical member that is relatively displaced with a respect to the first optical member wherein

    in the case when the first light and the second light are generated from the different positions, the first light and the second light are made to be incident on a same position of the second optical member and to interfere with each other, and in the case when the first light and the second light are generated from the same position, the first light and the second light are made to be incident on different positions of the second optical member and to interfere with each other.

According to the encoder, the first light and the second light that are incident on the same position of the second optical member and interfere are generated in the first optical member at different positions. If the incident angle of the illumination light to the first optical member is changed in this state, a large optical path difference occurs between the first light and the second light and the phase difference between the first light and the second light will be greatly modulated, which improves the modulation efficiency of the interference lights that interfere in the second optical member.

The invention is described further hereinafter, by way of example only, with reference to the accompanying drawings in which:

In the accompanying drawings:

    FIG. 1 is a view showing a schematic arrangement of a main section of an encoder related to an embodiment of the present invention;
    FIG. 2 is a view showing a modulation (No. 1) of the encoder in FIG. 1;
    FIG. 3 is a view showing a modulation (No. 2) of the encoder in FIG. 1;
    FIG. 4 is a different optical path view of the encoder in FIG. 1;
    FIG. 5 is a view for describing an optical path difference between light A and light B;
    FIG. 6 is a view schematically showing an entire configuration of an optical system of an encoder;
    FIG. 7 is a view showing an encoder equipped with two reference scales;
    FIG. 8 is an optical layout of the encoder in FIG. 7:

FIG. 9 is a view showing a modulation (No. 1) of an encoder that employs a reflection mirror;
FIG. 10 is a view showing a modulation (No. 2) of an encoder that employs a reflection mirror; and
FIG. 11 is a view used for describing a method for measuring the gradient of movement scale 24.

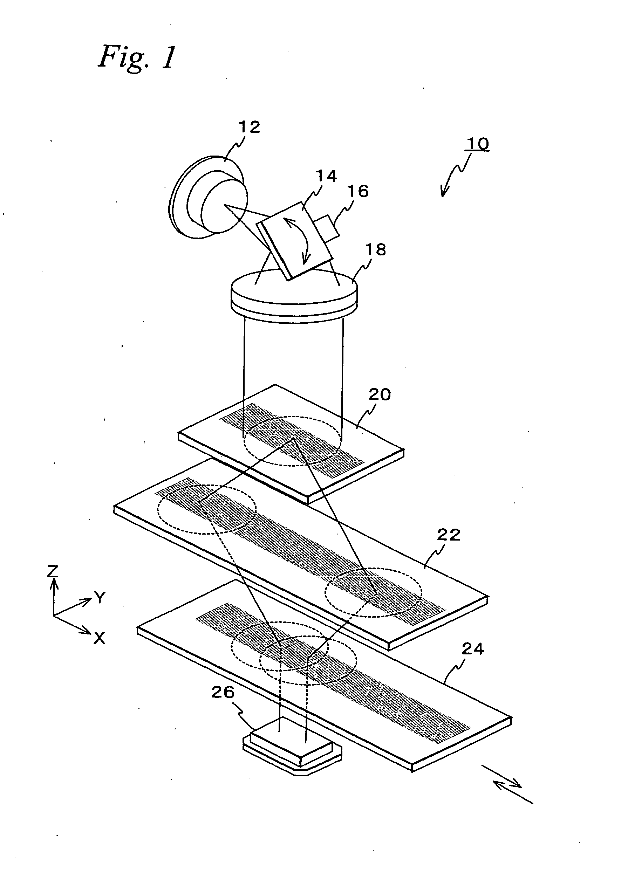

An embodiment of the present invention will be described below, with reference to FIGS. 1 to 6.

FIG. 1 shows an entire configuration of a main section of an encoder 10 related to an embodiment of the present invention. As is shown in FIG. 1, encoder 10 is a so-called diffraction interference type encoder, and is a linear encoder that detects the movement direction, the movement amount, or the displacement of a movable body that moves in a predetermined direction (an X-axis direction).

As is shown in FIG. 1, encoder 10 is equipped with a light source 12, a vibration mirror 14, a collimator lens 18, index scales 20 and 22, a movement scale 24, and a photodetection element 26.

Light source 12 emits a coherent light, such as for example, a laser beam of a wavelength $\lambda$ (= 850 nm), toward the +X direction in FIG. 1.

Vibration mirror 14 reflects the laser beam from light source 12 towards index scale 20. Vibration mirror 14 rotationally vibrates periodically in a rotational direction around a Y-axis by a drive unit 16, which has an actuator. And, by the rotational vibration, the reflection direction of the light incident on vibration mirror 14 becomes different depending on the direction of the reflection surface, and the angle of the illumination light that is incident on collimator lens 18 becomes periodically modulated.

Collimator lens 18 converts the laser beam reflected off vibration mirror 14 into a parallel beam.

Index scale 20 is a transmissive type phase grating consisting of a plate on which a diffraction grating with a period direction in the X-axis direction is formed, and the parallel beam that has passed through collimator lens 18 enters index scale 20. In index scale 20, a plurality of diffracted lights is generated based on the incident parallel beam. Of the diffracted lights, $\pm$ first-order diffracted lights (in FIG. 1, the diffracted light outgoing from the +X side is to be a +1st order diffracted light, and the diffracted light outgoing from the -X side is to be a -1st order diffracted light) generated in index scale 20 are shown in FIG. 1.

Similar to index scale 20, index scale 22 is a transmissive type phase grating consisting of a plate on which a diffraction grating with a period direction in the X-axis direction is formed, and index scale 22 is placed in between index scale 20 and movement scale 24. Index scale 22 diffracts the -1st order diffracted light generated in index scale 20 and generates a +1st order diffracted light. This +1st order diffracted light proceeds toward movement scale 24. Further, index scale 22 diffracts the +1st order diffracted light generated in index scale 20 and generates a -1st order diffracted light. This -1st order diffracted light proceeds toward movement scale 24.

A part of the $\pm$ first-order diffracted lights generated in index scale 22 overlaps and interferes with each other in movement scale 24.

Similar to index scales 20 and 22, movement scale 24 is a transmissive type phase grating consisting of a plate on which a diffraction grating with a period direction in the X-axis direction is formed. In movement scale 24, the +1st order diffracted light generated in index scale 22 is diffracted so as to generate a -1st order diffracted light, while the -1st order diffracted light generated in index scale 22 is diffracted so as to generate a +1st order diffracted light.

The $\pm$ first-order diffracted lights outgoing from movement scale 24 are incident on photodetection element 26 in the interfered state. As a consequence, photodetection element 26 outputs a photoelectric conversion signal that shows the interference intensity of the interference light. As it will be described later, positional information of movement scale 24 will be detected, based on the photoelectric conversion signal.

In the description below, the diffracted light on the +X side shown in FIG. 1 will be described as the +1st order diffracted light, and the diffracted light on the -X side shown in FIG. 1 will be described as the -1st order diffracted light.

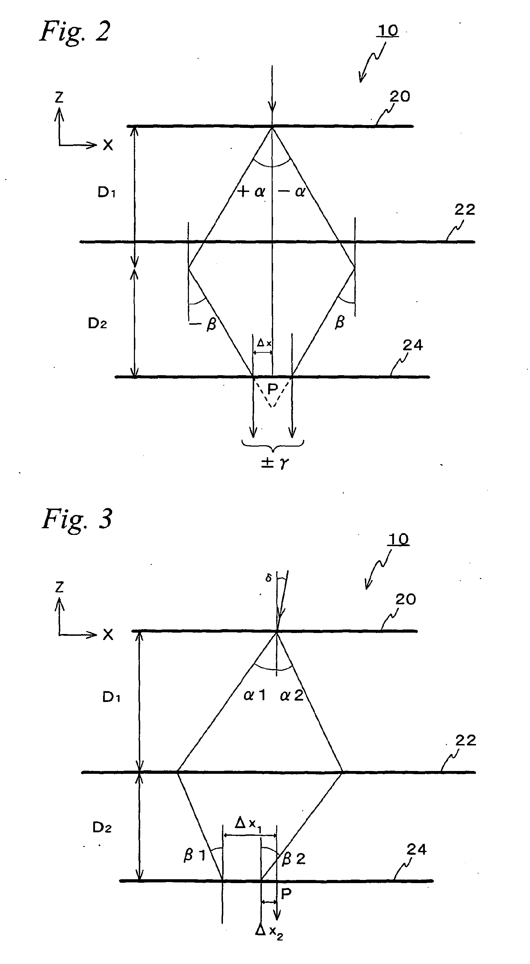

FIG. 2 shows a drawing of an optical path in a state where the laser beam is perpendicularly incident on index scale 20. As is shown in FIG. 2, the distance between index scale 20 and index scale 22 is to be $D_1$, and the distance between index scale 22 and movement scale 24 is to be $D_2$. And, in the embodiment, the distance between the scales is set so that $D_1 \neq D_2$. When grating pitch of index scale 20 is indicated as P1, grating pitch of index scale 22 is indicated as P2, and grating pitch of movement scale 24 is indicated as P3, then, various values can be set as P1, P2, and P3. Therefore, the following expressions can be set.

$$(1) \quad P1 = P3 = p, \quad P2 = p/2$$

$$(2) \quad P1 \neq P2 \neq P3, \quad \text{however,} \quad 1/P3 = 1/P2 - 1/P1$$

In the case of (1) and in the case of (2) , the modulated state of the interference light received by photodetection element 26 is different. Therefore, in the description below, the cases will be described for (1) and also for (2) as necessary.

When the laser beam is perpendicularly incident on index scale 20, $\pm 1^{st}$ order diffracted lights having angles of $\pm\alpha$ are generated (the angle of the $+1^{st}$ order diffracted light is $-\alpha$ and the angle of the $-1^{st}$ order diffracted light is $+\alpha$). After a $\pm 1^{st}$ order diffraction occurs (diffraction angle $\pm\beta$) further to these diffracted lights in index scale 22, the diffracted lights are incident on movement scale 24 where a $\pm 1^{st}$ order diffraction occurs again, and the diffracted lights are emitted at angles of $\pm\gamma$.

Now, the case will be described of (1), that is, when P1 = P3 = p and P2 = p/2. For example, p can be set as p = 4$\mu$m. In this case, angles $\alpha$, $\beta$, $\gamma$ and can be defined as in the following equations.

$$\sin\alpha \; = \; \lambda/P1 \; = \; \lambda/p$$

$$\sin\beta \; = \; \lambda/P2 \; - \; \sin\alpha \; = \; \lambda/p \; = \; \sin\alpha$$

$$\sin\gamma \; = \; \lambda/P3 \; - \; \sin\beta \; = \; 0$$

From the equations above, it can be seen that in the case of (1), $\alpha=\beta$, and $\gamma=0$ .

More specifically, in the case of (1), because $D_1 \neq D_2$ and $\alpha=\beta$, the $\pm 1^{st}$ order diffracted lights emitted from one point in index scale 20 are not incident on the same point on movement scale 24 as is shown n FIG. 2. Now, supposing that $D_1=D_2$, then the $\pm 1^{st}$ order diffracted lights emitted from one point in index scale 20 are incident on the same point on movement scale 24, and when the shift between this point and the actual incident point of the $\pm 1^{st}$ order diffracted lights in the X-axis direction is expressed as $\Delta x$, then $\Delta x$ can be expressed as in the following equation.

$$\Delta x \; = \; (D_1 \; - \; D_2)* \; \tan\alpha$$

In the case the laser beam is perpendicularly incident on index scale 20, the optical path length of the $+1^{st}$ order diffracted light and the $-1^{st}$ order diffracted light generated in index scale 20 is the same, and when the optical path length is described as L, L can be described as $L=(D_1+D_2)/\cos\alpha$. In this case, light intensity I of the interference fringe of movement scale 24 can be expressed as follows.

Equation 1

$$
\begin{aligned}
I &= \left| \exp(jkL - j2\pi\Delta x/p - jkx \cdot \sin\alpha) + \exp(jkL - j2\pi\Delta x/p + jkx \cdot \sin\alpha) \right|^2 \\
&= \left| 2\cos(kx \cdot \sin\alpha) \right|^2 \\
&= \left| 2\cos(2\pi x/p) \right|^2 \\
&= 2\{1 + \cos(4\pi x/p)\} \quad \cdots(1)
\end{aligned}
$$

As is obvious when looking at equation (1), information of various types is included in light intensity I of the interference fringe formed in movement scale 24. For example, exp(jkL) in equation (1) above includes information on the optical path length, exp(-j2$\pi\Delta$x/p) includes information related to the positional shift in the X-axis direction of the incident position of each diffracted light on movement scale 24, and exp(-jkx*sin$\alpha$) includes information related to the angle of the diffracted light.

The most important point that equation (1) indicates is that the interference fringe made on movement scale 24 does not move in the X-axis direction, even if the positional relation between the scales in the Z-axis direction changes when the laser beam is perpendicularly incident on index scale 20.

Meanwhile, FIG. 3 shows a case when the laser beam is obliquely incident (angle $\delta$) on index scale 20 by vibration mirror 14. In the case the angle of the -1st order diffracted light is $\alpha 1$ ($\alpha 1 > 0$) and the angle of the +1st order diffracted light is $\alpha 2$ ($\alpha 2 < 0$), after these diffracted lights are diffracted in index scale 22 (outgoing angle $\beta 1 < 0$, $\beta 2 > 0$), these lights are incident on movement scale 24 where a $\pm$1st order diffraction occurs again and the diffracted lights are emitted at angles $\gamma 1$ and $\gamma 2$. In this case, the relation between angles $\alpha 1$, $\beta 1$, and $\gamma 1$ can be defined as in the equations below.

<relation between angles $\alpha 1$, $\beta 1$, and $\gamma 1$ of the -1st order diffracted light>

$$\sin\alpha 1 = \lambda/P1 + \sin\delta = \lambda/p + \sin\delta$$

$$\sin\beta 1 = -\lambda/P2 + \sin\alpha 1 = -\lambda/p + \sin\delta \quad ;\beta 1 < 0$$

$$\sin\gamma 1 = \lambda/P3 + \sin\beta 1 = \sin\delta$$

<relation between angles $\alpha 2$, $\beta 2$, and $\gamma 2$ of the +1st order diffracted light>

$$\sin\alpha 2 = -\lambda/P1 + \sin\delta = -\lambda/p + \sin\delta \quad ; \alpha 2 = \beta 1 < 0$$

$$\sin\beta 2 = \lambda/P2 + \sin\alpha 2 = \lambda/p + \sin\delta \quad ;\beta 2 = \alpha 1$$

$$\sin\gamma 2 = -\lambda/P3 + \sin\beta 2 = \sin\delta$$

From these relations, $\gamma 1 = \gamma 2 = \delta$ can be acquired.

As is shown in FIG. 3, the incident position of the $\pm$1st order diffracted lights when the laser beam is incident on movement scale 24 shifts from a point P by $\Delta x_1$ and $\Delta x_2$. $\Delta x_1$ and $\Delta x_2$ can be expressed as in the following equations.

$$\Delta x_1 = D_1 * \tan\alpha 1 - D_2 * \tan|\beta 1|$$

$$\Delta x_2 = D_2 * \tan\beta 2 - D_1 * \tan|\alpha 2|$$

$$\Delta x_1 + \Delta x_2 = D_1 * (\tan\alpha 1 - \tan|\alpha 2|) + D_2 * (\tan\beta 2 - \tan|\beta 1|)$$

$$\Delta x_1 - \Delta x_2 = D_1 * (\tan\alpha 1 + \tan|\alpha 2|) - D_2 * (\tan\beta 2 + \tan|\beta 1|)$$

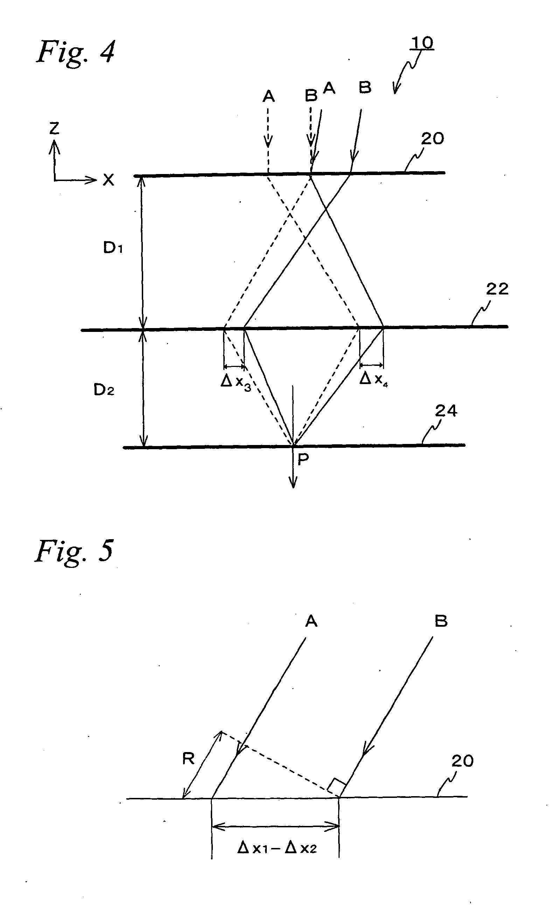

The optical path of the diffracted light in encoder 10 can also be expressed as in FIG. 4. FIG. 4 shows an optical path of the diffracted light incident on point P on movement scale 24. More specifically, FIG. 4 shows the optical path in the case when the laser beam is perpendicularly incident on movement scale 24 in a dotted line, and the optical path in the case when the laser beam is incident on movement scale 24 at an incident angle $\delta$ in a solid line. In these two cases, when the shift of the incident position of the -1st order diffracted light on index scale 22 is $\Delta x_3$ and the shift of the incident position of the +1st order diffracted light on index scale 22 is $\Delta x_4$, then $\Delta x_3$ and $\Delta x_4$ can be expressed as in the following equation.

$$\Delta x_3 = D_2 * (\tan\alpha - \tan|\beta1|)$$

$$\Delta x_4 = D_2 * (\tan\beta2 - \tan\alpha)$$

In the case the laser beam is obliquely incident on index scale 20, the optical path length of the -1st order diffracted light is $D_1/\cos\alpha1 + D_2/\cos\beta1$ while the optical path length of the +1st order diffracted light is $D_1/\cos\alpha2 + D_2/\cos\beta1$. When the irradiation change of index scale 22 is also taken into consideration, light intensity I of the interference light on movement scale 24 can be computed as follows.

Equation 2

$$
\begin{aligned}
I = &| \exp(jkx \cdot \sin\beta1 + jkD_1/\cos\alpha1 + jkD_2/\cos\beta1 - 2\pi\Delta x1/p + 4\pi\Delta x3/p + jk\Delta x1 \cdot \sin\delta) \\
&+ \exp(jkx \cdot \sin\beta2 + jkD_1/\cos\alpha2 + jkD_2/\cos\beta2 + 2\pi\Delta x2/p - 4\pi\Delta x4/p + jk\Delta x2 \cdot \sin\delta)|^2 \\
= &\, 2[1 + \cos\{kx \cdot (\sin\beta1 - \sin\beta2)\} \\
&+ kD_1(1/\cos\alpha1 - 1/\cos\alpha2) + kD_2(1/\cos\beta1 - 1/\cos\beta2) \\
&- 2\pi/p \cdot (\Delta x_1 + \Delta x_2) + 4\pi/p \cdot (\Delta x_3 + \Delta x_4) \\
&+ k\sin\delta \cdot (\Delta x_1 - \Delta x_2)\}] \\
= &\, 2[1 + \cos\{4\pi x/p \\
&+ 2\pi D_1/\lambda \cdot (1/\cos\alpha1 - 1/\cos\alpha2) + 2\pi D_2/\lambda \cdot (1/\cos\beta1 - 1/\cos\beta2) \\
&- 2\pi D_1/p \cdot (\tan\alpha1 - \tan|\alpha2|) + 2\pi D_2/p \cdot (\tan\beta2 - \tan|\beta1|) \\
&+ 2\pi D_1 \sin\delta/\lambda \cdot (\tan\alpha1 + \tan|\alpha2|) \\
&- 2\pi D_2 \sin\delta/\lambda \cdot (\tan\beta2 + \tan|\beta1|)\}] \\
= &\, 2[1 + \cos\{4\pi x/p \\
&+ 2\pi(D_1 - D_2)/\lambda \cdot (1/\cos\alpha1 - 1/\cos\alpha2) \\
&- 2\pi(D_1 - D_2)/p \cdot (\tan\alpha1 - \tan|\alpha2|) \\
&+ 2\pi(D_1 - D_2)\sin\delta/\lambda \cdot (\tan\alpha1 + \tan|\alpha2|)\}] \quad \cdots(2)
\end{aligned}
$$

In the second term to the fourth term of an independent variable of the cos function in equation (2) above, the second term and the third term negate each other so that the values substantially become zero, and in the end only the fourth term $(2\pi(D_1-D_2)\sin\delta/\lambda*(\tan\alpha1 + \tan|\alpha2|)$ remains. The value of the fourth term changes according to the change of the incident angle $\delta$, therefore, when the incident angle $\delta$ changes, the interference fringe on movement scale 24 moves in the X-axis direction. Accordingly, modulation of the light intensity signal corresponding to the photodetection results of photodetection element 26 is achieved.

In the pitch relation of P1=P3=p and P2=p/2, if $D_1=D_2$, then the fourth term also becomes zero and the light intensity signal cannot be modulated, therefore, it is necessary to be $D_1 \neq D_2$. More specifically, if $D_1$ and $D_2$ are different, then, the degree of modulation changes so that the distance of the scale has to be controlled by for example, keeping the distance constant. Further, conversely, it is possible to control the degree of modulation by the setting of $D_1$ and $D_2$.

As is described above, the degree of modulation of the light intensity signal corresponding to the photodetection results of photodetection element 26 is decided by the pitch of the diffraction grating (diffraction angle: $\tan\alpha$), the incident angle of the laser beam ($\sin\delta$), and the difference in distance on movement scale 24 ($D_1 - D_2$).

Next, in the case of (2), that is, when P1≠P2≠P3; 1/P3=1/P2-1/P1 will be described. For example, in the case P1=2.4 $\mu$m, P2=1.5 $\mu$m, and P3= 4 $\mu$m, then, the angles $\alpha$, $\beta$, and $\gamma$ can be defined as in the equations below.

$$\sin\alpha = \lambda/P1$$

$$\sin\beta = \lambda/P2 - \sin\alpha = \lambda/P2 - \lambda/P1$$

$$\sin\gamma = \lambda/P3 - \sin\beta = \lambda/P3 - \lambda/P2 + \lambda/P1 = 0$$

$$(\because 1/P3 = 1/P2 - 1/P1)$$

Furthermore, $\Delta x$ (refer to FIG. 2) can be expressed as in the following equation.

$$\Delta x = D_1 * \tan\alpha - D_2 * \tan\beta$$

In the case the laser beam is perpendicularly incident on index scale 20, the optical length of the +1st order diffracted light and the -1st order diffracted light generated in index scale 20 is the same. When the optical path length is expressed as L, then $L = D_1/\cos\alpha + D_2/\cos\beta$, and light intensity I of the interference fringe on movement scale 24 can be computed. The shift amount of index scale 22 is omitted since the shift amount is regarded relative.

Equation 3

$$I = \left|\exp(jkL - j2\pi\Delta x/p - jkx \cdot \sin\beta) + \exp(jkL - j2\pi\Delta x/p + jkx \cdot \sin\beta)\right|^2$$
$$= \left|2\cos(kx \cdot \sin\beta)\right|^2$$
$$= 2\{1 + \cos(4\pi x/p3)\} \quad \cdots(3)$$

Meanwhile, as is shown in FIG. 3, in the case the laser beam is obliquely incident (angle $\delta$) on index scale 20, the angle of the -1st order diffracted light is to be $\alpha1$ ($\alpha1>0$) and the angle of the +1st order diffracted light is to be $\alpha2$ ($\alpha2<0$). After these diffracted lights are diffracted in index scale 22 (outgoing angle $\beta1<0$, $\beta2>0$), these lights are incident on movement scale 24 where a $\pm$1st order diffraction occurs again and the diffracted lights are emitted at angles $\gamma1$ and $\gamma2$. In this case, the relation between angles $\alpha1$, $\beta1$, and $\gamma1$ can be defined as in the equations below.

<relation between angles $\alpha1$, $\beta1$, and $\gamma1$ of the -1st order diffracted light>

$$\sin\alpha1 = \lambda/P1 + \sin\delta$$

$$\sin\beta1 = -\lambda/P2 + \sin\alpha1 = -\lambda/P2 + \lambda/P1 + \sin\delta \quad ;\beta1<0$$

$$\sin\gamma1 = \lambda/P3 + \sin\beta1 = \sin\delta$$

<relation between angles $\alpha2$, $\beta2$, and $\gamma2$ of the +1st order diffracted light>

$$\sin\alpha2 = -\lambda/P1 + \sin\delta; \quad \alpha2<0$$

$$\sin\beta2 \;=\; \lambda/P2 \;+\; \sin\alpha2 \;=\; \lambda/P2 \;-\; \lambda/P1 \;+\; \sin\delta$$

$$\sin\gamma2 \;=\; -\lambda/P3 \;+\; \sin\beta2 \;=\; \sin\delta$$

From these results, $\gamma1 = \gamma2 = \delta$ can be acquired.

Further, $\Delta X_1$ and $\Delta x_2$ (refer to FIG. 3) are expressed as in the equations below.

$$\Delta x_1 \;=\; D_1 * \tan\alpha1 \;-\; D_2 * \tan|\beta1|$$

$$\Delta x_2 \;=\; D_2 * \tan\beta2 \;-\; D_1 * \tan|\alpha2|$$

$$\Delta x_1 \;+\; \Delta x_2 \;=\; D_1 * (\tan\alpha1 \;-\; \tan|\alpha2|) \;+\; D_2 * (\tan\beta2 \;-\; \tan|\beta1|)$$

$$\Delta x_1 \;-\; \Delta x_2 \;=\; D_1 * (\tan\alpha1 \;+\; \tan|\alpha2|) \;-\; D_2 * (\tan\beta2 \;+\; \tan|\beta1|)$$

then $\Delta x_3$ and $\Delta x_4$ can be expressed as in the following equation.

$$\Delta x_3 \;=\; D_2 * (\tan\alpha \;-\; \tan|\beta1|)$$

$$\Delta x_4 \;=\; D_2 * (\tan\beta2 \;-\; \tan\alpha)$$

In the case the laser beam is obliquely incident on index scale 20, the optical path length of the -1st order diffracted light is $D_1/\cos\alpha1 + D_2/\cos\beta1$ while the optical path length of the +1st order diffracted light is $D_1/\cos\alpha2 + D_2/\cos\beta1$. When the irradiation change of index scale 22 is also taken into consideration, light intensity I of the interference light on movement scale 24 can be computed as follows.

$$\text{Equation 4}$$

$$I = | \exp(jkx \cdot \sin\beta1 + jkD_1/\cos\alpha1 + jkD_2/\cos\beta1 - 2\pi\Delta x1/p1 + 2\pi\Delta x3/p2 + jk\Delta x1 \cdot \sin\delta)$$
$$+ \exp(jkx \cdot \sin\beta2 + jkD_1/\cos\alpha2 + jkD_2/\cos\beta2 + 2\pi\Delta x2/p1 - 2\pi\Delta x4/p2 + jk\Delta x2 \cdot \sin\delta)$$
$$= 2[1 + \cos\{kx \cdot (\sin\beta1 - \sin\beta2)\}$$
$$+ kD_1(1/\cos\alpha1 - 1/\cos\alpha2) + kD_2(1/\cos\beta1 - 1/\cos\beta2)$$
$$- 2\pi/p1 \cdot (\Delta x_1 + \Delta x_2) + 2\pi/p2 \cdot (\Delta x_3 + \Delta x_4)$$
$$+ k\sin\delta \cdot (\Delta x_1 - \Delta x_2)\}]$$
$$= 2[1 + \cos\{4\pi x/p$$
$$+ 2\pi D_1/\lambda \cdot (1/\cos\alpha1 - 1/\cos\alpha2) + 2\pi D_2/\lambda \cdot (1/\cos\beta1 - 1/\cos\beta2)$$
$$- 2\pi D_1/p1 \cdot (\tan\alpha1 - \tan|\alpha2|) - 2\pi D_2/p1 \cdot (\tan\beta2 - \tan|\beta1|)$$
$$+ 2\pi D_2/p2 \cdot (\tan\beta2 - \tan|\beta1|)$$
$$+ 2\pi D_1 \sin\delta/\lambda \cdot (\tan\alpha1 + \tan|\alpha2|)$$
$$- 2\pi D_2 \sin\delta/\lambda \cdot (\tan\beta2 + \tan|\beta1|)\}] \quad \cdots(4)$$

In the second term to the eighth term of an independent variable of the cos function in equation (4) above, the second term to the sixth term negate one another so that the values substantially become zero, and in the end only the seventh and eighth terms remain. The values of the seventh and eighth terms change according to the change of the incident angle $\delta$, therefore, when angle $\delta$ changes, the interference fringe on movement scale 24 moves in the X-axis direction. Accordingly, modulation of the light intensity signal corresponding to the photodetection results of photodetection element 26 is achieved.

In this case as well, the degree of modulation of the light intensity signal corresponding to the photodetection results of photodetection element 26 is decided by the pitch of the diffraction grating (diffraction angle: $\tan\alpha1$, $\tan|\alpha2|$, $\tan\beta1$, $\tan|\beta2|$), the incident angle of the laser beam ($\sin\delta$), and the difference in distance of the scale. Also in this case, when $D_1=D_2$, then the seventh and eighth terms negate each other and become substantially zero and modulation of the light intensity signal becomes difficult. Therefore, as is described above, it is necessary to be $D_1{\neq}D_2$. That is, $D_1$ and $D_2$ should be set so that an optimal degree of modulation can be acquired according to each of the pitches P1, P2, and P3.

As is shown in FIG. 4, the diffracted light incident on one point on movement scale 24 is light emitted from two different points on index scale 20. In FIG. 4, these two lights are indicated as light A and light B. More specifically, the distance between the incident position of light A and light B on index scale 20 turns out to be substantially the same as the distance between the incident position of the two lights in FIG. 3. As is obvious from equation (2) above or the like, the distance between lights A and B is proportional to the distance difference of the scales ($D_1$ - $D_2$). When comparing light A with light B, the optical path length of light A is longer than the optical length of light B according to incident angle $\delta$ of the laser beam, which causes an optical path length difference R as is shown in FIG. 5, therefore, it can also be assumed that a phase difference will occur between the diffracted lights entering photodetection element 26.

More specifically, by the phase difference occurring between light A and light B, the intensity of photoelectric conversion signals output from photodetection element 26 changes. That is, the phase difference between light A and light B caused by the periodical change of the incident angle of the incident lights is modulated, and the interference signal is modulated.

In the case the angular frequency of the rotation vibration of vibration mirror 14 is expressed as $\omega$ and the amplitude is expressed as $\varepsilon$ (half amplitude $\varepsilon/2$), then the signal corresponding to the rotation vibration of vibration mirror 14 can be expressed as $(\varepsilon/2)\sin\omega t$. In the description below, modulation degree $2d=2\pi\varepsilon/p$ is defined as an index for showing the width of amplitude $\varepsilon$, with grating pitch p of index scale 20 and movement scale 24 used as a reference.

The photoelectric conversion signal output from photodetection element 26 is sent to a detection unit (not shown). The detection unit demodulates the photoelectric conversion signal and detects the positional information of movement scale 24. The detection unit extracts the 0th order component (direct current component), the 1st order component, the 2nd order component, the 3rd order component, and the 4th order component corresponding to the signal of rotation vibration of vibration mirror 14.

The signal waveform of the photoelectric conversion signal can be expanded into a Bessel series regarding time t. This Bessel expansion coefficient $J_n$ (n=1, 2, 3, ...) is a constant value as long as modulation degree 2d is constant. The nth order component In (n=1, 2, 3, and 4) extracted in the detection unit can be expressed as in the following equations.

$$I_0 = 1 + J_0(2d) * \cos(4\pi x/p) \qquad \ldots (5)$$

$$I_1 = 2J_1(2d) * \sin(4\pi x/p) \qquad \ldots (6)$$

$$I_2 = 2J_2(2d) * \cos(4\pi x/p) \qquad \ldots (7)$$

$$I_3 = 2J_3(2d) * \sin(4\pi x/p) \qquad \ldots (8)$$

$$I_4 = 2J_4(2d) * \cos(4\pi x/p) \qquad \ldots (9)$$

As is obvious from equations (5) to (9) above, in the detection unit, when a specific frequency component (e.g. the 1st order component $I_1$) related to temporal change of the photoelectric conversion signal and another a specific frequency component (e.g. the 2nd order component $I_2$) are extracted, a sine signal and a cosine signal serving as positional information of movement scale 24 can be obtained. These two signals can be the output of encoder 10.

Because the sine signal and cosine signal described above are signals that can be accurately obtained under the premise that modulation degree 2d is constant, encoder 10 is further equipped with a control mechanism that controls the modulation degree at a constant level.

A modulation degree control circuit takes in the 1st order component $I_1$, the 2nd order component $I_2$, the 3rd order component $I_3$, and the 4th order component $I_4$ that have been extracted, and monitors modulation degree 2d based on the components. Modulation degree 2d are expressed by $I_1/I_3$ and $I_2/I_4$. The 1st order component $I_1$ to the 4th order component $I_4$ include the sine function and cosine function, therefore, the value that has a function value which is not in the proximity of zero is selected as the modulation degree at this point. The modulation degree control circuit controls drive unit 16 in the direction so that the modulation degree that has been monitored nears the target value, which has been described earlier in the description. Accordingly, modulation degree 2d maintains a constant level.

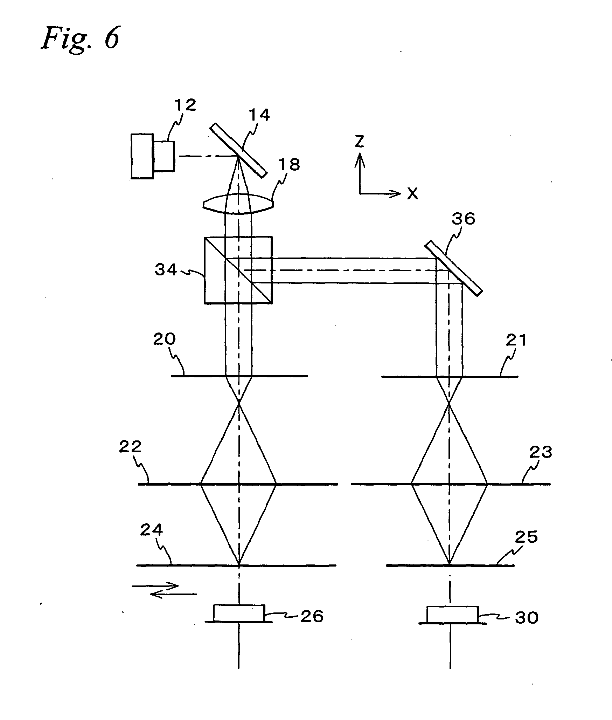

FIG. 6 shows a schematic configuration of an optical system whose encoder 10 is partly improved. As is shown in FIG. 6, in addition to the component parts shown in FIG. 1, encoder 10 is further equipped with index scales 21 and 23, a beam splitter 34, a reflection mirror 36, a reference scale 25, and a photodetection element 30. Index scale 21 is the same type of scale as index scale 20 (the grating pitch is also the same), and index scale 23 is the same type of scale as index scale 22 (the grating pitch is also the same). Further, reference scale 25 is a transmissive type phase grating consisting of a plate on which a diffraction grating with a period direction in the X-axis direction is formed as in movement scale 24, however, while movement scale can be moved in the X-axis direction, reference scale 25 is fixed, and the positional relation between index scales 21, 23 and reference scale 25 is constant at all times.

The light reflected off beam splitter 34 is bent at reflection mirror 36, and is incident on index scale 21. The ±1st order diffracted lights generated in index scale 21 are further diffracted in index scale 23, and then are incident on reference scale 25.

As is described above, reference scale 25 is fixed to movement scale 24, therefore, the photoelectric conversion signal output from photodetection element 30 changes according only to the change in the incident angle of the laser beam. Accordingly, it becomes possible to detect information related to the change in the incident angle of the laser beam from the photoelectric conversion signal.

In encoder 10, the vibration center of vibration mirror 14 may drift depending on the temperature of the atmosphere or the change in humidity. In this case, since the signal level of the photoelectric conversion signal of photodetection element 30 changes, the detection unit detects the drift amount of the vibration center of vibration mirror 14 based on such change in the signal level.

In this case, from the photoelectric conversion signal output from photodetection element 26 and the photoelectric conversion signal output from photodetection element 30, the detection unit extracts the 1st order component $I_1$, the 2nd order component $I_2$, the 3rd order component $I_3$, and the 4th order component $I_4$ described above, and outputs positional information of movement scale 24 (to be expressed as positional information A) and positional information of reference scale 25 (to be expressed as positional information B). Then, by subtracting the detection results of the photoelectric conversion signal by photodetection element 30 or in other words positional information B, from the detection results of the photoelectric conversion signal by photodetection element 26, or in other words positional information A, the signal for detecting positional information of the encoder whose influence of the drift of the vibration center of vibration mirror 14 has been removed (the final positional information of movement scale 24, or positional information which is positional information A of movement scale 24 that has been corrected using positional information B of reference scale 25) can be obtained.

$$(\text{positional information A} - \text{positional information B})$$
$$= (\text{signal for detecting positional information of the encoder})$$

Incidentally, a conversion factor k for obtaining the drift component, which is in a linear relation with the photoelectric conversion signal output from photodetection element 30 can be multiplied to positional information B.

Furthermore, the photoelectric conversion signal output from photodetection element 30 is also used for detection of movement scale 24 in the Z-axis direction. The modulation degree control circuit described above monitors modulation degree 2d based on the photoelectric conversion signal output from photodetection element 26 (a first modulation degree), whereas at the same time, the modulation degree control circuit also monitors modulation degree 2d based on the photoelectric conversion signal output from photodetection element 30 (a second modulation degree).

The cause of the change in the second modulation degree obtained from the photodetection results of the laser beam via reference scale 25 is only the change in the vibration state of the incident angle of the laser beam from light source 12, whereas the change in the first modulation degree obtained from the photodetection results of the light via movement scale 24 is caused by the drift of movement scale 24 in the Z-axis direction in addition to the change in the vibration state of the incident angle of the laser beam from light source 12. Accordingly, in the case when both the first modulation degree and the second modulation degree change, it can be assumed that the vibration state of the incident angle of the laser beam has changed, and in the case only the first modulation degree changes, it can be assumed that movement scale 24 has drifted in the Z-axis direction.

From the description above, the difference between the first modulation degree and the second modulation degree is to be expressed by the drift of movement scale 24 in the Z-axis direction. The difference, proportion or the like of the first modulation degree and the second modulation degree and the drift of movement scale 24 in the Z-axis direction can be assumed to be in a linear relation in a predetermined range.

For example, information related to the drift in the Z direction can be measured, for example, by detecting the amplitude ratio of a plurality of harmonic components. Photoelectric conversion signal from photodetection element 26 (hereinafter expressed as $Z_{OUT}$) can be expressed in a form of a Bessel function as is shown in equation (10) below. In the equation below, $J_n$ (n=1, 2, 3... ) is a Bessel expansion coefficient and x indicates the positional information of movement scale 22, d indicates modulation efficiency, and $\omega$ indicates modulation frequency of vibration mirror 14.

$$
\begin{aligned}
Z_{OUT} \quad &= \cos[d*\sin(\omega t) + x] \\
&= \cos[d*\sin(\omega t)]*\cos(x) - \sin[d*\sin(\omega t)]*\sin(x) \\
&= J_0(d)*\cos(x) - 2J_1(d)*\sin(x)*\sin(\omega t) \\
&\quad + 2J_2(d)*\cos(x)*\cos(2\omega t) \\
&\quad - 2J_3(d)*\sin(x)*\sin(3\omega t) \\
&\quad + 2J_4(d)*\cos(x)*\cos(4\omega t) \qquad \text{...... (10)}
\end{aligned}
$$

As it can be seen from equation (10), fundamental wave component A1, the second harmonic wave component A2, the third harmonic wave component A3, and the fourth harmonic wave component A4 of photoelectric conversion signal $Z_{OUT}$ are respectively expressed as in equations (11) to (14) below, and the amplitude of an odd number order harmonic wave component is a function of sin(x) while the amplitude of an even number order harmonic wave component is a of function cos (x).

$$A1 = -2J_1(d)*\sin(x)*\sin(\omega t) \qquad \text{...... (11)}$$

$$A2 = + 2J_2(d) * \cos(x) * \cos(2\omega t) \qquad ...... \ (12)$$

$$A3 = - 2J_3(d) * \sin(x) * \sin(3\omega t) \qquad ...... \ (13)$$

$$A4 = + 2J_4(d) * \cos(x) * \cos(4\omega t) \qquad ...... \ (14)$$

Then, when calculations of A1/A3 and A2/A4 are performed, A1/A3 and A2/A4 become functions of modulation efficiency d, as is shown in equations (15) and (16) below.

$$A1/A3 = J_1(d) / \ J_3(d) \qquad ...... \ (15)$$

$$A2/A4 = J_2(d) / \ J_4(d) \qquad ...... \ (16)$$

Because the functions shown in equations (15) and (16) above are amplitude ratios of the harmonic wave components, modulation efficiency d can be obtained by monitoring the calculation results of $J_1(d)/J_3(d)$ or $J_2(d)/J_4(d)$. Also, because modulation efficiency d is proportional to amplitude s which changes according to the change of position of movement scale 24 in the Z-axis direction, by monitoring modulation efficiency d, measurement of movement scale 24 in the Z-axis direction becomes possible. However, in order to accurately perform measurement of movement scale 24 in the Z-axis direction, measurement of movement scale 24 in the Z-axis direction has to be performed from calculation results of $J_1(d)/J_3(d)$ when the condition $|\sin(x)|\geqq 1/\sqrt{2}$ is satisfied, and further from calculation results of $J_2(d)/J_4(d)$ when the condition $|\cos(x)|\geqq 1/\sqrt{2}$ is satisfied.

The modulation degree control circuit monitors the calculation results of $J_1(d)/J_3(d)$ or $J_2(d)/J_4(d)$ and performs measurement of movement scale 24 in the Z-axis direction, and outputs information related to the drift of movement scale 24 in the Z-axis direction (in this case, the drift amount) as a detection signal.

Further, the movement direction (measurement direction) of movement scale 24 and the proceeding direction of the laser beam are almost perpendicular, however, there actually is a slight inclination. In such a case, the drift of movement scale 24 in the Z-axis direction becomes a cause of measurement error (offset component) in the positional information of movement scale 24.

Accordingly, in the detection unit, the offset component of movement scale 24 is computed from the drift amount of the movement scale 24 in the Z-axis direction, and it becomes possible to compute the final positional information of movement scale 24 by subtracting the offset component from the positional information of movement scale 24.

The configuration of the encoder is not limited to the one shown in FIG. 6, and a configuration in which a beam splitter is placed between index scale 22 and movement scale 24 and the divided light is incident on reference scale 25 can also be employed.

As is described in detail so far, according to the present invention, the lights outgoing from different positions of index scale 20 are incident on the same position on movement scale 24 and interfere with each other. Therefore, when the incident angle of the laser beams to index scale 20 is changed, the variation range of the phase difference of the lights outgoing from different position of index scale 20 becomes larger, which improves the modulation efficiency of the interference light formed in movement scale 24 when compared with the case when the lights outgoing from the same position of index scale 20 are incident on the same position on movement scale 24.

Further, according to the preset embodiment, index scale 20 and movement scale 24 are both diffraction gratings, however, instead of index scale 20, a beam splitter can be employed.

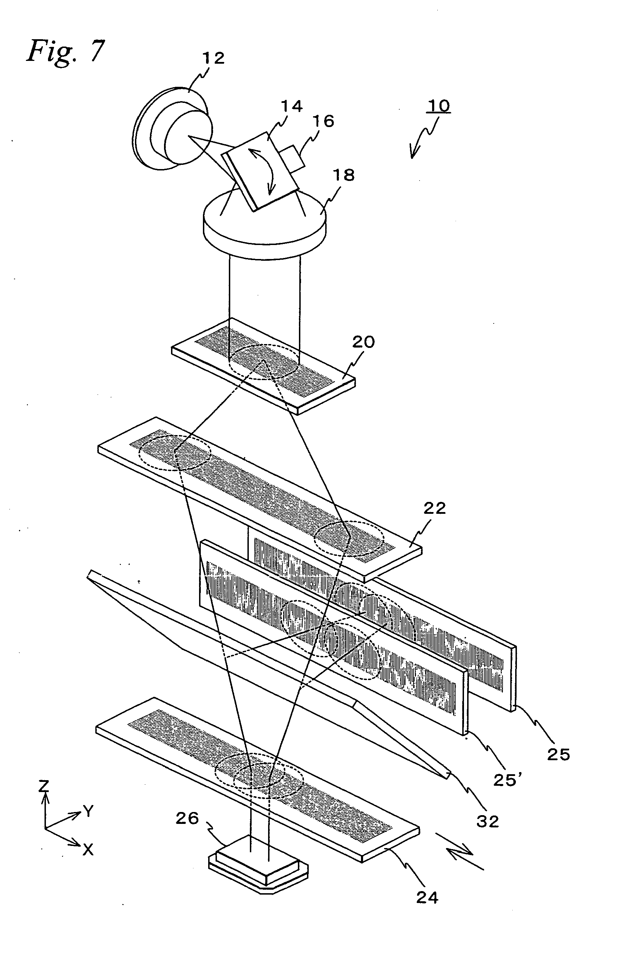

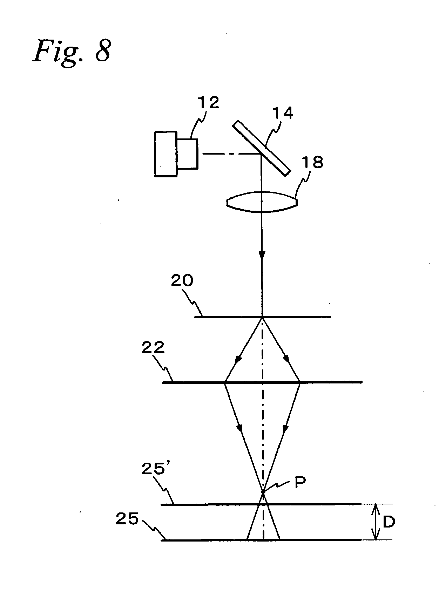

Further, the reference scale can be divided into two sections, and by placing the sections so that they face each other in the proceeding direction of the laser beam, the drift amount can be measured with good precision. For example, as is shown in FIG. 7, a part of the laser beam that has transmitted index scale 22 is branched to the +Y direction, and a first reference scale 25' and a second reference scale 25 are placed on the optical path. As is shown in FIG. 8, which is a view of an optical layout of encoder 10, the first reference scale 25' and the second reference scale 25 are placed at positions shifted by a predetermined distance from a vibration center point P where the ± first-order diffracted lights emitted from index scale 22 completely overlaps, spaced apart from each other at a distance D.

In this case, when the modulation degree of the interference light from the first reference scale 25' is indicated as A1, the modulation degree of the interference light from the second reference scale 25 is indicated as A2, and the modulation degree of the interference light from movement scale 24 is indicated as A, then, displacement Z of movement scale 24 in the Z-axis direction can be expressed as (A/ (A2-A1)) *D. This shows that even in the case vibration center point P of the diffracted light from index scale 22 has moved, or to be more specific, in the case vibration center point P has moved so that it is on the first reference scale 25' or the second reference scale 25, displacement Z of movement scale 24 in the Z-axis direction can be measured in a stable manner. Accordingly, it becomes possible to improve the measurement stability when compared with the case when only one reference scale is used.

Further, encoder 10 related to the embodiment is further equipped with index scale 22 that guides lights A and B to movement scale 24. Incidentally, instead of index scale 22, a reflection mirror can also be used.

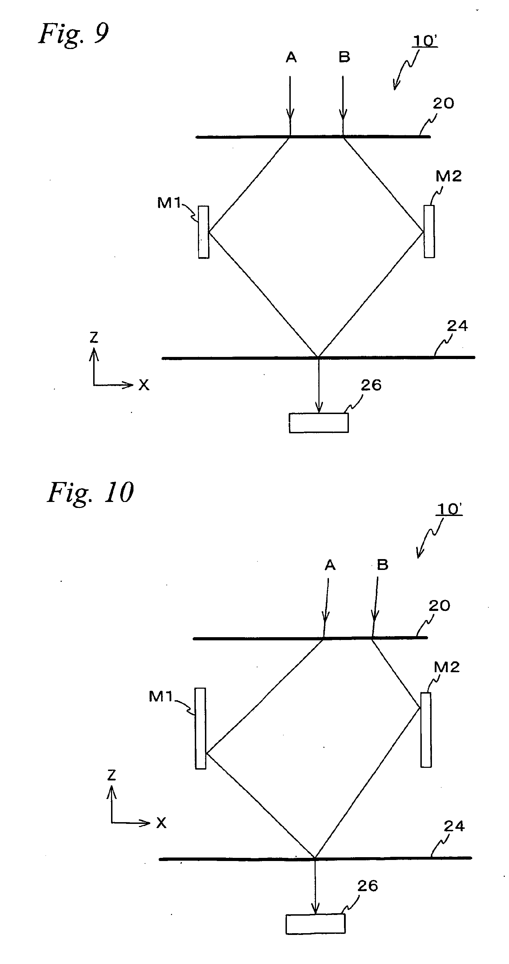

FIGS. 9 and 10 show an optical path of a laser beam in an encoder 10' that employs reflection mirrors M1 and M2. As is shown in FIG. 9, in the case the laser beam is incident almost perpendicularly, an optical path difference occurs between optical paths A and B that are incident on the same position on movement scale 24, however, in the case the laser beam is obliquely incident as is shown in FIG. 10, an optical path difference occurs between optical paths A and B and the photoelectric conversion signal output from photodetection element 26 or the like is modulated as in the case of encoder 10.

In FIGS. 9 and 10, mirrors are used instead of index scale 22, therefore, the positive and negative directions of modulation (the movement direction of the interference fringe on movement scale 24) will be the opposite of encoder 10 related to the embodiment described above.

The pitch of index scale 20 and movement scale 24 does not necessarily have to be the same, however, because the outgoing direction of the diffracted lights generated in movement scale 24 is decided according to wavelength λ of the light and the grating pitch, the arrangement relation between optical members, which are disposed in between index scale 20 and movement scale 24, and photodetection element 26 or the like will be appropriately decided depending on the grating pitch of these diffraction gratings. For example, according to the relation between the grating pitches of index scale 20 and movement scale 24 and modulation efficiency, the reflection surfaces of mirror M1 and mirror M2 can be inclined at optional angles according to the grating pitch ratio, instead of being arranged in parallel with each other.

Furthermore, according to the embodiment, in addition to the photodetection results by photodetection element 26 via index scales 20 and 22 and movement scale 24 that are relatively displaced with respect to beam splitter 34, when the photodetection results by photodetection sensor 30 of index scales 21 and 23 and reference scale 25 are used, it also becomes possible to compute information related to positional shift of movement scale 24 in the Z-axis direction, besides positional information on movement scale 24 related to the measurement direction.

More specifically, the detection unit computes information related to positional shift of movement scale 24 in the Z-axis direction, based on the first modulation degree of the laser beam obtained from the photodetection results of photodetection element 26 and the second modulation degree of the laser beam obtained from the photodetection results of photodetection element 30. This computation allows the detection of whether the drift in the Z-axis direction, which is a positional shift in a direction different from its original measurement direction, has occurred or not.

Further, according to the embodiment, positional information of movement scale 24 in the X-axis direction obtained from the photodetection results of the photodetection system is corrected based on the computation results of the detection unit, and positional information of movement scale 24 in the X-axis direction is detected with high precision.

In encoder 10 related to the embodiment, the drift amount of movement scale 24 in the Z-axis direction was obtained using the modulation degree that has been detected. This drift amount is to be the movement amount of the movable body in the Z-axis direction without any changes. Accordingly, positional information of the movable body in the Z-axis direction can be measured, based on the modulation degree that is detected.

In this case, positional information (movement distance) in the Z-axis direction can be obtained based on the difference, proportion or the like of the first modulation degree and the second modulation degree as in the embodiment.

The amplitude of vibration mirror 14 affects the detection sensitivity of such drift amount of movement scale 24 in the Z-axis direction (or the movement distance of the movable body in the Z-axis direction). Accordingly, it is preferable that the amplitude of vibration mirror 14 is set to a magnitude in which such detection sensitivity becomes highest.

When deciding the amplitude of vibration mirror 14, the amplitude of vibration mirror 14 should be actively changed and Z measurement of the movable body (movement scale 24) should be performed a plurality of times, and then the amplitude whose detection accuracy is highest can be obtained as the optimal amplitude. Further, amplitude that has a large change ratio can be obtained by observing the change ratio of the modulation degree depending on the amplitude, and the amplitude can be obtained as the optimal amplitude.

Measurement of the drift of the movement scale in the Z-axis direction (the movement distance of the movable body in the Z-axis direction) based on the modulation degree can also be applied to an encoder that employs other methods (such as an encoder by an optical pick up method or the like), other than the encoder by the diffraction interference method related to the embodiment.

Further, the measurement of the drift amount in the Z-axis direction based on the modulation degree described in the embodiment and measurement of the drift amount of the movement scale in the Z-axis direction according to astigmatism by the optical pick up method can be combined together, and the detection accuracy of the drift amount can be improved using measurement values obtained in one of the measurements for calibrating the measurement values obtained in the other measurement.

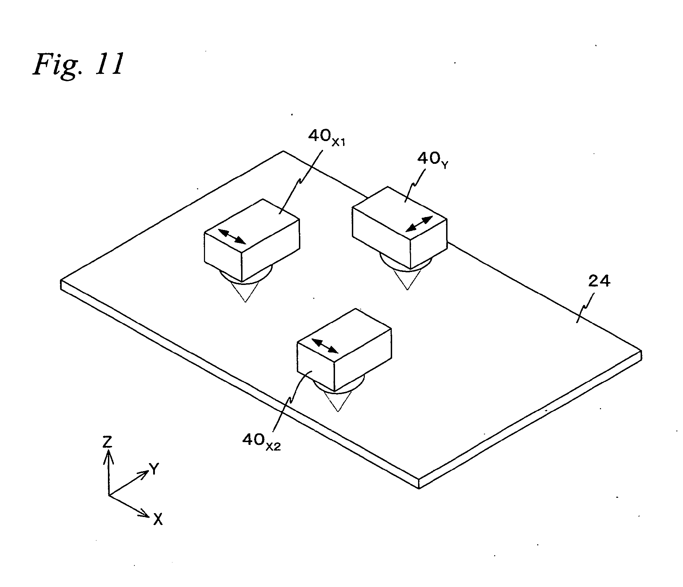

Further, by performing the measurement of the drift amount in the Z-axis direction at a plurality of places on the scale, pitching and rolling can also be measured. As an example, as is shown in FIG. 11, three heads $40_{x1}$, $40_{x2}$, and $40_y$, for example, can be used to perform measurement at three points that are not on the same straight line on movement scale 24, and in addition to displacement measurement of movement scale 24 in the X-axis direction by heads $40_{x1}$ and $40_{x2}$ and displacement measurement of movement scale 24 in the Y-axis direction by head 40y, the roll (rotation around the X-axis) , the pitch (rotation around the Y-axis), and the yaw (rotation around the Z-axis) of the movement scale can be measured. In the case error characteristics, which accompany the gradient of the encoder, is known, by feeding back such gradient information (roll, pitch, and yaw) to the encoder output, or by correcting the gradient information with an upper processing circuit system, it becomes possible to perform correction of not only the displacement in the Z-axis direction, but also the errors in the X-axis direction and the Y-axis direction.

The position of movement scale 24 in the Z-axis direction can be adjusted based on the computation results of the detection unit. By this adjustment, the drift of movement scale 24 in the Z-axis direction can be suppressed, and positional information of movement scale 24 in the X-axis direction ca be detected with high precision.

In the embodiment above, the case has been described where movement scale 24 and reference scale 25 are a transmissive type scale. The present invention, however, is not limited to this, and movement scale 24 can also be a reflection type scale. In this case, the light reflected by movement scale 24 is reflected off a beam splitter or the like, and photodetection element 26 can be arranged on the optical path of the reflection light. In this case as well, measurement similar to the embodiment can be performed. Further, the side of reference scale 25 can be a reflection type scale, or both the movement scale 24 and reference scale 25 can be a reflection type scale.

Further, in the embodiment above, vibration mirror 14 was employed. However, instead of vibration mirror 14, a crystal, a tuning fork crystal or the like can be used. The point is that the unit used does not matter, as long as the unit has a mechanism of periodically changing the incident angle of the laser beam incident on index scale 20 and 21. For example, a plurality of point light sources arranged in a row can be used as a light source, and each point light source can be periodically lighted.

Further, in the embodiment above, the proceeding direction of the laser beam was changed so that the incident angle to index scale 20 was periodically vibrated. However, the proceeding direction of the laser beam can be fixed, and the attitude of index scale 20 can be rotationally vibrated periodically.

Further, the mechanism of detecting the drift of movement scale 24 in the Z-axis direction can also be applied to encoders other than encoder 10 in the embodiment above. For example, the mechanism can also be applied to an encoder that has drive unit 16 for driving vibration mirror 14 removed and the vibration mirror changed to a reflection mirror, so that instead of vibrating the mirror, light source 12 is periodically vibrated along the Z-axis.

Further, the present invention can also be applied to an encoder that makes collimator lens 18 periodically vibrate along the X-axis without vibrating light source 12. Further, the present invention can also be applied to an encoder that makes the proceeding direction or the passing position of the laser beam vibrate periodically by placing an acoustic optical module (AOM) or an electro-optical module (EOM) in between light source 12 and collimator lens 18.

Further, in the embodiment above, the grating pitch of the diffraction grating of movement scale 24 and reference scale 25 was the same, however, the present invention is not limited to this, and different grating pitches can be employed. In such a case, conversion factor k in equation (1) described earlier should be changed.

Further, in the embodiment above, the case has been described where movement scale 24 was moved. However, the present invention is not limited to this, and the present invention can also be applied to the case where components other than movement scale 24 are moved, as long as the configuration to be employed is a configuration in which movement scale 24 and other optical members are moved relatively.

Further, in the embodiment above, the case has been described where the encoder is equipped with only one set of movement scale 24 and the corresponding photodetection element 26 that form a pair and only one set of reference scale 25 and the corresponding photodetection element 27 that also form a pair, however, the present invention is not limited to this. For example, two or more sets of the former pair can be prepared, or two or more sets of the latter pair can be prepared, or two or more sets of each of the pairs can be prepared. In this case, the measurement values obtained by each photodetection element can be averaged, and measurement with higher precision can be performed, such as by using the averaged value and correcting the movement information of the movement scale, or the values can be used for other types of measurement.

In the embodiment above, the case has been described where index scales 20, 21, 22, and 23, movement scale 24, and reference scale 25 each have a phase grating, however, the present invention is not limited to this, and an amplitude diffraction grating (contrast diffraction grating) can also be employed. Further, the amplitude diffraction grating and the phase grating can be mixed. Further, as each scale, a transparent substrate on which a metal (e.g. chromium) pattern is formed can be employed.

As is described so far, various kinds of modifications are possible for the placement of the optical system in an encoder. Because of space limitations, in the embodiment above or the like, various optical elements in the encoder were all arranged within the XZ plane, however, the present invention is not limited to this, and the various optical elements that guide the diffracted lights generated in index scale 20 onto movement scale 24 can naturally be arranged three-dimensionally.

In the embodiment above, $\pm$ first-order diffracted lights were used as the measurement light. However, the present invention is not limited to this, and an interference light of diffracted lights of a higher order can also be used as the measurement light, or an interference light of diffracted lights of a different order such as in a $0^{th}$ order and an $n^{th}$ order (or a $-n^{th}$ order), or in a $+n^{th}$ order and a $+(m+n)^{th}$ order, can also be used as the measurement light.

Further, the encoder related to the embodiment above was a linear encoder that detects the positional information of a movable body in a uniaxial direction, however, the present invention can also be applied to a rotary encoder that detects the rotational amount of a rotational body.

The values of the wavelength of the laser beam and the grating pitch of each of the diffraction gratings in the embodiment above are mere examples, and the values are appropriately decided according to the resolution required in the encoder. In general, the smaller the grating pitch of the diffraction grating is, the better the resolution of the encoder becomes.

**Claims**

1. An encoder, comprising:

   a first optical member (20) on which an illumination light is incident and where a first light and a second light are generated from different positions or a same position;
   a change unit that periodically modulates an incident angle of the illumination light with respect to the first optical member (20); and
   a second optical member (24) that is relatively displaced with respect to the first optical member (20), wherein in the case when the first light and the second light are generated from the different positions, the first light and the second light are made to be incident on a same position of the second optical member (24) and to interfere with each other, and in the case when the first light and the second light are generated from the same position, the first light and the second light are made to be incident on different positions of the second optical member (24) and to interfere with each other.

2. The encoder according to Claim 1 wherein
   the first optical member (20) and the second optical member (24) are diffraction gratings.

3. The encoder according to one of Claims 1 and 2, further comprising:

   a third optical member that guides the first light and the second light to the second optical member (24), wherein the third optical member is one of a diffraction grating and a reflection optical element.

4. The encoder according to any one of Claims 1 to 3 wherein
   an optical distance of the second optical member (24) with respect to the first optical member (20) is measured by comparing an amplitude of a harmonic component included in a signal based on an interference light of the first light and the second light.

5. The encoder according to Claim 4 wherein
   the optical distance of the second optical member (24) with respect to the first optical member (20) is measured at a plurality of points which are not on the same straight line on the second optical member (24), and a gradient of the second optical member (24) with respect to the first optical member (20) is measured.

6. The encoder according to any one of Claims 1 to 5, further comprising:

   a measurement unit that measures information related to a distance between the first optical member (20) and the second optical member (24), based on photodetection results of light via the first optical member (20) and photodetection results of light via the second optical member (24).

**7.** The encoder according to Claim 1, further comprising:

a branching optical system (34) that branches the illumination light to emit a branched light;
a first photodetection system (26) that receives the illumination light via the second optical member (24);
a reference scale (25) whose positional relation is fixed with respect to the branching optical system (34) and also on which the branched light is made to be incident;
a second photodetection system (30) that receives the branched light via the reference scale (25); and
a computing unit that computes positional information of the second optical member (24) in an optical axis direction of the illumination light, based on photodetection results of the first photodetection system (26) and photodetection results of the second photodetection system (30), wherein
the second optical member (24) is relatively displaced with respect to the branching optical system (34) and also has first patterns arranged along a relatively displaced direction,
the reference scale (25) has second patterns arranged in a predetermined direction, and
the change unit modulates a direction of the illumination light to a direction corresponding to an arrangement direction of the first patterns and an arrangement direction of the second patterns.

**8.** The encoder according to Claim 7 wherein
the second photodetection system (30) receives the branched light at different positions and outputs a plurality of photodetection results at each position.

**9.** The encoder according to one of Claims 7 and 8 wherein
the computing unit computes the positional information, based on information related to modulation degree of the illumination light which is obtained from the photodetection results of the first photodetection system (26) and information related to modulation degree of the branched light which is obtained from the photodetection results of the second photodetection system (30).

**10.** The encoder according to one of Claims 7 and 8 wherein
the positional information of the second optical member (24) is measured at a plurality of points which are not on the same straight line on the reference scale, and
the computing unit computes a gradient of the second optical member (24) with respect to the branching optical system, based on information which is obtained from the photodetection results of the first photodetection system (26) and is related to modulation degree of the illumination light measured at the plurality of points and information related to modulation degree of the branched light which is obtained from the photodetection results of the second photodetection system (30).

**11.** The encoder according to any one of Claims 7 to 10, further comprising:

an adjustment unit that adjusts the positional information of second optical member (24), based on computation results of the computing unit.

**12.** The encoder according to any one of Claims 7 to 10, further comprising:

a correction unit that corrects the positional information of the second optical member (24) obtained from the photodetection results of the first photodetection system (26), based on computation results of the computing unit.


**Patentansprüche**

**1.** Encoder, der Folgendes umfasst:

ein erstes optisches Element (20), auf das ein Beleuchtungslicht fällt und wo ein erstes Licht und ein zweites Licht von verschiedenen Positionen oder von einer selben Position erzeugt werden;
eine Änderungseinheit, die einen Einfallswinkel des Beleuchtungslichts in Bezug auf das erste optische Element (20) periodisch moduliert; und
ein zweites optisches Element (24), das in Bezug auf das erste optische Element (20) relativ verschoben ist, wobei
in dem Fall, dass das erste Licht und das zweite Licht von unterschiedlichen Positionen erzeugt werden, bewirkt wird, dass das erste Licht und das zweite Licht auf dieselbe Position des zweiten optischen Elementes (24) fallen und miteinander interferieren, und in dem Fall, dass das erste Licht und das zweite Licht von derselben Position erzeugt werden, bewirkt wird, dass das erste Licht und das zweite Licht auf unterschiedliche Positionen des zweiten optischen Elementes (24) fallen und miteinander interferieren.

2. Encoder nach Anspruch 1, wobei das erste optische Element (20) und das zweite optische Element (24) Beugungsgitter sind.

3. Encoder nach Anspruch 1 oder 2, der ferner ein drittes optisches Element umfasst, das das erste Licht und das zweite Licht zu dem zweiten optischen Element (24) führt, wobei das dritte optische Element entweder ein Beugungsgitter oder ein optisches Reflexionselement ist.

4. Encoder nach einem der Ansprüche 1 bis 3, wobei eine optische Distanz des zweiten optischen Elementes (24) mit Bezug auf das erste optische Element (20) durch Verglichen einer Amplitude einer in einem Signal enthaltenen Oberwellenkomponente auf der Basis eines Interferenzlichts des ersten Lichts und des zweiten Lichts gemessen wird.

5. Encoder nach Anspruch 4, wobei die optische Distanz des zweiten optischen Elements (24) mit Bezug auf das erste optische Element (20) an mehreren Punkten gemessen wird, die sich nicht auf derselben Geraden auf dem zweiten optischen Element (24) befinden, und ein Gradient des zweiten optischen Elementes (24) mit Bezug auf das erste optische Element (20) gemessen wird.

6. Encoder nach einem der Ansprüche 1 bis 5, der ferner eine Messeinheit umfasst, die Informationen in Bezug auf eine Distanz zwischen dem ersten optischen Element (20) und dem zweiten optischen Element (24) auf der Basis von Photodetektionsergebnissen von Licht über das erste optische Element (20) und Photodetektionsergebnissen von Licht über das zweite optische Element (24) misst.

7. Encoder nach Anspruch 1, der ferner Folgendes umfasst:

ein optisches Verzweigungssystem (34), das das Beleuchtungslicht verzweigt, um ein verzweigtes Licht zu emittieren;
ein erstes Photodetektionssystem (26), das das Beleuchtungslicht über das zweite optische Element (24) empfängt;
eine Referenzskala (25), deren Positionsbeziehung mit Bezug auf das optische Verzweigungssystem (34) festgelegt ist und auf die das verzweigte Licht fallen gelassen werden kann;
ein zweites Photodetektionssystem (30), das das verzweigte Licht über die Referenzskala (25) empfängt; und
eine Recheneinheit, die Positionsinformationen des zweiten optischen Elementes (24) in einer optischen Achsenrichtung des Beleuchtungslichts auf der Basis von Photodetektionsergebnissen des ersten Photodetektionssystems (26) und von Photodetektionsergebnissen des zweiten Photodetektionssystems (30) berechnet, wobei
das zweite optische Element (24) mit Bezug auf das optische Verzweigungssystem (34) relativ verschoben ist und auch erste Muster hat, die entlang einer relativ verschobenen Richtung angeordnet sind,
die Referenzskala (25) zweite Muster hat, die in einer vorbestimmten Richtung angeordnet sind, und
die Änderungseinheit eine Richtung des Beleuchtungslichts zu einer Richtung moduliert, die einer Anordnungsrichtung der ersten Muster und einer Anordnungsrichtung der zweiten Mutter entspricht.

8. Encoder nach Anspruch 7, wobei das zweite Photodetektionssystem (30) das verzweigte Licht an unterschiedlichen Positionen empfängt und mehrere Photodetektionsergebnisse an jeder Position ausgibt.

9. Encoder nach Anspruch 7 oder 8, wobei die Recheneinheit die Positionsinformationen auf der Basis von Informationen in Bezug auf den von den Photodetektionsergebnissen des ersten Photodetektionssystems (26) erhaltenen Modulationsgrad des Beleuchtungslichts und von Informationen in Bezug auf den von den Photodetektionsergebnissen des zweiten Photodetektionssystems (30) erhaltenen Modulationsgrad des verzweigten Lichtes errechnet.

10. Encoder nach Anspruch 7 oder 8, wobei:

die Positionsinformationen des zweiten optischen Elementes (24) an mehreren Punkten gemessen werden, die sich nicht auf derselben Geraden auf der Referenzskala befinden, und
die Recheneinheit einen Gradienten des zweiten optischen Elementes (24) mit Bezug auf das optische Verzweigungssystem auf der Basis von Informationen, die von den Photodetektionsergebnissen des ersten Photodetektionssystems (26) erhalten werden und sich auf den Modulationsgrad des an mehreren Punkten gemessenen Beleuchtungslichts beziehen, und von Informationen in Bezug auf den von den Photodetektionsergebnissen des zweiten Photodetektionssystems (30) erhaltenen Modulationsgrad des verzweigten Lichtes berechnet.

11. Encoder nach einem der Ansprüche 7 bis 10, der ferner eine Justiereinheit umfasst, die die Positionsinformationen des zweiten optischen Elementes (24) auf der Basis von Rechenergebnissen der Recheneinheit justiert.

12. Encoder nach einem der Ansprüche 7 bis 10, der ferner eine Korrektureinheit umfasst, die die von den Photodetektionsergebnissen des ersten Photodetektionssystems (26) erhaltenen Positionsinformationen des zweiten optischen Elementes (24) auf der Basis von Rechenergebnissen der Recheneinheit korrigiert.

**Revendications**

1. Codeur, comprenant :

un premier élément optique (20) frappé par une lumière d'illumination et où une première lumière et une seconde lumière sont générées depuis des positions différentes ou une même position ;
un module de changement qui module périodiquement un angle d'incidence de la lumière d'illumination par rapport au premier élément optique (20) ; et
un deuxième élément optique (24) qui est déplacé relativement au premier élément optique (20),

dans lequel
quand la première lumière et la seconde lumière sont générées depuis des positions différentes, il est fait en sorte que la première lumière et la seconde lumière frappent une même position du deuxième élément optique (24) et interfèrent l'une avec l'autre, et quand la première lumière et la seconde lumière sont générées depuis la même position, il est fait en sorte que la première lumière et la seconde lumière frappent des positions différentes du deuxième élément optique (24) et interfèrent l'une avec l'autre.

2. Codeur selon la revendication 1, dans lequel
le premier élément optique (20) et le deuxième élément optique (24) sont des réseaux de diffraction.

3. Codeur selon l'une des revendications 1 et 2, comprenant en outre :

un troisième élément optique qui guide la première lumière et la seconde lumière vers le deuxième élément optique (24),

dans lequel
le troisième élément optique est l'un d'un réseau de diffraction et d'un élément optique de réflexion.

4. Codeur selon l'une quelconque des revendications 1 à 3, dans lequel
une distance optique du deuxième élément optique (24) par rapport au premier élément optique (20) est mesurée en comparant une amplitude d'une composante harmonique incluse dans un signal basé sur une lumière d'interférence de la première lumière et de la seconde lumière.

5. Codeur selon la revendication 4, dans lequel
la distance optique du deuxième élément optique (24) par rapport au premier élément optique (20) est mesurée à une pluralité de points qui ne sont pas sur la même ligne droite sur le deuxième élément optique (24), et un gradient du deuxième élément optique (24) par rapport au premier élément optique (20) est mesuré.

6. Codeur selon l'une quelconque des revendications 1 à 5, comprenant en outre :

une unité de mesure qui mesure des informations relatives à une distance entre le premier élément optique (20) et le deuxième élément optique (24), en fonction de résultats de photodétection de lumière par l'intermédiaire du premier élément optique (20) et de résultats de photodétection de lumière par l'intermédiaire du deuxième élément optique (24).

**7.** Codeur selon la revendication 1, comprenant en outre :

un système optique de dérivation (34) qui effectue une dérivation de la lumière d'illumination pour émettre une lumière dérivée ;

un premier système de photodétection (26) qui reçoit la lumière d'illumination par l'intermédiaire du deuxième élément optique (24) ;

une échelle de référence (25) dont la relation positionnelle est fixe par rapport au système optique de dérivation (34) et aussi sur laquelle il est fait en sorte que la lumière dérivée frappe ,

un second système de photodétection (30) qui reçoit la lumière dérivée par l'intermédiaire de l'échelle de référence (25) ; et

un module de calcul qui calcule les informations de position du deuxième élément optique (24) dans un sens d'axe optique de la lumière d'illumination, en fonction de résultats de photodétection du premier système de photodétection (26) et de résultats de photodétection du second système de photodétection (30), dans lequel le deuxième élément optique (24) est déplacé relativement au système optique de dérivation (34) et comporte également des premiers motifs agencés le long d'un sens relativement déplacé,

l'échelle de référence (25) comporte des seconds motifs agencés dans un sens prédéterminé, et

le module de changement module un sens de la lumière d'illumination en un sens correspondant à un sens d'agencement des premiers motifs et un sens d'agencement des seconds motifs.

**8.** Codeur selon la revendication 7, dans lequel

le second système de photodétection (30) reçoit la lumière dérivée à différentes positions et produit en sortie une pluralité de résultats de photodétection à chaque position.

**9.** Codeur selon l'une des revendications 7 et 8, dans lequel

le module de calcul calcule les informations de position, en fonction d'informations relatives au degré de modulation de la lumière d'illumination qui est obtenu à partir des résultats de photodétection du premier système de photodétection (26) et d'informations liées au degré de modulation de la lumière dérivée qui est obtenu à partir des résultats de photodétection du second système de photodétection (30).

**10.** Codeur selon l'une des revendications 7 et 8, dans lequel

les informations de position du deuxième élément optique (24) sont mesurées à une pluralité de points qui ne sont pas sur la même ligne droite sur l'échelle de référence, et

le module de calcul calcule un gradient du deuxième élément optique (24) par rapport au système optique de dérivation, en fonction d'informations qui sont obtenues à partir des résultats de photodétection du premier système de photodétection (26) et se rapportent au degré de modulation de la lumière d'illumination mesuré à la pluralité de points et d'informations liées au degré de modulation de la lumière dérivée qui est obtenu à partir des résultats de photodétection du second système de photodétection (30).

**11.** Codeur selon l'une quelconque des revendications 7 à 10, comprenant en outre :

un module de réglage qui règle les informations de position du deuxième élément optique (24), en fonction des résultats de calcul du module de calcul.

**12.** Codeur selon l'une quelconque des revendications 7 à 10, comprenant en outre :

un module de correction qui corrige les informations de position du deuxième élément optique (24) obtenues à partir des résultats de photodétection du premier système de photodétection (26), en fonction des résultats de calcul du module de calcul.

*Fig. 1*

*Fig. 2*

*Fig. 3*

*Fig. 4*

*Fig. 5*

*Fig. 6*

*Fig. 7*

*Fig. 8*

*Fig. 9*

*Fig. 10*

26

*Fig. 11*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005003438 A
- US 6639686 B
- JP 2005326232 A
- JP 2005326231 A